# EUROPÄISCHE PATENTANMELDUNG

(11) **EP 1 980 161 A2**
(43) Veröffentlichungstag der Anmeldung: **15.10.2008**
(21) Anmeldenummer: 08006839.8
(22) Anmeldetag: 04.04.2008
(51) Int. Cl.: A23L 1/31

(54) **Verfahren zum Herstellen eines Putenfleischerzeugnisses**

(30) Priorität: 07.04.2007 DE 102007016578
(71) Anmelder: Gebr. Nölke GmbH & Co. KG, 33775 Versmold (DE)
(72) Erfinder: Nölke, Michael, 33775 Versmold (DE)
(74) Vertreter: Elbertzhagen, Otto

(57) **Zusammenfassung**

Bei diesem Verfahren wird ein Putenfleischerzeugnis als verzehrfertig verpackbares Erzeugnis hergestellt, welches beim Verzehr infolge seines Geruchs und seines Geschmacks die besondere Art seiner Zubereitung vermittelt. Hierzu werden zunächst mit einer Gewürzlake behandelte Fleischstücke in Därme eingefüllt, die nach dem Befüllen mitsamt ihrer Inhalte in eine längliche Barrenform mit einem Querschnitt von geringerer Höhe sowie dieser gegenüber größeren Breite gepreßt werden, anschließend wird diese Barrenform durch Garen der Darminhalte stabilisiert. Es werden nachfolgend die barrenförmigen Gebildet gekühlt, wonach der Darm entfernt und die so erhaltenen, gegarten Rohlinge in der Barrenform mittels Wärmebeaufschlagung ihrer Breitseiten unter Verwendung eines Bratbandes angebraten und abschließend in ihrem Querschnitt entsprechende Scheiben aufgeschnitten werden.

## Beschreibung

Die Erfindung bezieht sich auf ein Verfahren zum Herstellen eines Putenfleischerzeugnisses, bei dem entsprechend Truthahnfleisch als Fleischrohstoff zur Verwendung kommt.

Aufgabe der Erfindung ist es, ein verzehrfertig verpackbares Erzeugnis herzustellen, welches beim Verzehr infolge seines Geruchs und seines Geschmacks die besondere Art seiner Zubereitung vermittelt.

Gelöst wird diese Aufgabe durch ein Verfahren mit den Merkmalen des Anspruchs 1.

Für die Erfindung ist wesentlich, ein lebensmittelgerecht verpackbares Produkt zu erhalten, welches beim Auspacken und Verzehr durch den Verbraucher sich durch seinen Duft und seinen Geschmacks als gebratenes Erzeugnis präsentiert. Hierfür ist die Verwendung des Bratbandes von Bedeutung, welches mit seinem beheiztem Obertrum und seinem beheizten Untertrum sowie entsprechender Ober- und Unterhitze auf die barrenförmigen Fleisch-Rohlinge an den in Relation zu den seitlichen Flanken großflächigen oberen und unteren Kontaktseiten einwirkt. Man erhält insgesamt ein Produkt, welches im zentralen Bereich weitgehend homogen ist, und im oberen und unteren Randbereich eine Bratkruste aufweist, wie die aufgeschnittenen Scheiben erkennen lassen.

Bevorzugt werden als Rohfleischstücke Medaillons von der Putenbrust verwendet, die im Fachjargon auch als Läpple aus der Putenbrust bezeichnet werden.

Im einzelnen wird das rohe Putenfleisch in Form von Stücken zunächst mit einer Gewürzlake behandelt, und eine Mehr- oder Vielzahl der behandelten Fleischstücke wird in einen Darm eingefüllt. Der Darm hat eine längliche Hohlform und er wird nicht prall gefüllt sondern lediglich bis zu einem solchen Füllgrad, daß er sich einschließlich dem eingefüllten Fleisch in eine besondere Form bringen läßt. Diese Form wird dem gefüllten Darm mittels einer mechanischen Nachbehandlung aufgeprägt.

Eine Mehr- oder Vielzahl der nicht gänzlich gefüllten Därme wird anschließend auf einer der Etagen eines Garwagens angeordnet, bei dem es sich um einen sogenannten Gitter-Garwagen handelt, um durch das Gitter hindurch die für das Garen erforderliche Wärme heranzulassen. Auf jeder Etage des Garwagens sind durch entsprechendes Abteilen voneinander längliche Formen mit einem rechteckigen Querschnitt gebildet, und in jede dieser Formen wird ein gefüllter Darm eingelegt. Entsprechend ist die Länge einer derart abgeteilten Form auf die Länge des gefüllten Darms abgestimmt. Die freiliegenden Oberseiten der Därme in jeder Etage, also in jeder Lage, werden glattgestrichen, und danach wird ein Gitterrost auf die Etage aufgelegt, wodurch die Därme in die Formen eingepreßt werden. Jede dieser Formen hat einen rechteckigen Querschnitt, wobei die längeren Rechteckseiten erheblich länger als die kürzeren Rechteckseiten sind. Die gefüllten Därme nehmen diese Rechteckform weitgehend an.

In dieser Lage wird das in die Därme eingefüllte Fleisch durch Wärmebeaufschlagung gegart, womit die vorgegebene Form der befüllten Därme stabilisiert wird. Anschließend erfolgt eine Abkühlung der stabilisieren Gebilde, und die hiernach erhaltenen, noch mit den Därmen umhüllten Rohlinge weisen eine beständige, längliche Gestalt mit rechteckigem Querschnitt auf, die man als Barrenform bezeichnen kann.

Anschließend werden von den gegarten Fleisch-Rohlingen die Därme entfernt, und es werden die Rohlinge in der verbleibenden Barrenform mittels Erhitzen ihrer Breitseiten bei einer Temperatur von mehr als 200° Celsius angebraten. Für den wichtigen Bratvorgang wird ein sogenanntes Bratband verwendet, welches ein beheiztes Obertrum und ein be-heiztes Untertrum aufweist, die synchron miteinander laufen. Zwischen den Trumen werden die gegarten Rohlinge so angeordnet, daß sie mit den Breitseiten ihrer Barrenform am Untertrum und am Obertrum des Bratbandes anliegen und entsprechend mittels Unterhitze und Oberhitze an den Breitseiten angebraten werden. Entsprechend ist der Abstand der beiden Trume des Bratbandes auf die Dicke bzw. Höhe der Barrenform der gegarten Rohlinge eingestellt.

Als letztes werden die angebratenen barrenförmigen Rohlinge in Scheiben aufgeschnitten und es wird eine Mehr- oder Vielzahl dieser Scheiben verzehrfertig verpackt. So erhält man ein verkaufsfertiges Produkt, welches nach dem Öffnen der Verpackung sofort verzehrt werden kann und hierbei einen appetitlichen Bratenduft wahrnehmen läßt.

## Patentansprüche

1. Verfahren zum Herstellen eines Putenfleischerzeugnisses, bei dem zunächst mit einer Gewürzlake behandelte Fleischstücke in Därme eingefüllt werden, die nach dem Befüllen mitsamt ihrer Inhalte in eine längliche Barrenform mit einem Querschnitt von geringerer Höhe sowie dieser gegenüber größeren Breite gepreßt werden, anschließend wird diese Barrenform durch Garen der Darminhalte stabilisiert, und es werden nachfolgend die barrenförmigen Gebilde gekühlt, wonach der Darm entfernt und die so erhaltenen, gegarten Rohlinge in der Barrenform mittels Wärmebeaufschlagung ihrer Breitseiten unter Verwendung eines Bratbandes mit einem beheizten Obertrum und einem beheizten Untertrum angebraten und abschließend in ihrem Querschnitt entsprechende Scheiben aufgeschnitten werden.

2. Verfahren nach Anspruch 1,
**dadurch gekennzeichnet,**
**daß** als Fleischstücke Medaillons der Putenbrust verwendet werden.
